# Europäisches Patentamt

# European Patent Office

# Office européen des brevets

(19)

(11) Veröffentlichungsnummer: **0 190 547**
**B1**

# EUROPÄISCHE PATENTSCHRIFT

(12)

(45) Veröffentlichungstag der Patentschrift:
04.01.89

(21) Anmeldenummer: 85890259.6

(22) Anmeldetag: 18.10.85

(51) Int. Cl.⁴: **H 02 H 3/04**, H 02 H 9/04

(54) Ansprechzähl- und Überwachungs-Einrichtung für funkenstreckenlose Überspannungsableiter.

(30) Priorität: 31.01.85 AT 270/85

(43) Veröffentlichungstag der Anmeldung:
13.08.86 Patentblatt 86/33

(45) Bekanntmachung des Hinweises auf die Patenterteilung:
04.01.89 Patentblatt 89/1

(84) Benannte Vertragsstaaten:
CH DE FR GB IT LI NL SE

(56) Entgegenhaltungen:
EP-A-0 019 884
AT-A-312 085
DE-A-3 424 617
DE-B-1 588 244
FR-A-2 374 783
US-A-3 348 099

PATENT ABSTRACTS OF JAPAN, Band 2, Nr. 101 (E-78), 19. August 1978, page 5061 E 78; & JP - A - 53 65948 (TOKYO SHIBAURA) 06.12.1978

(73) Patentinhaber: Sprecher Energie Österreich Gesellschaft m.b.H., Franckstrasse 51, A-4020 Linz (AT)

(72) Erfinder: Bauer, Karl, Dipl.- Ing., Reintalerweg 5, A-4020 Linz (AT)
Erfinder: Steinparzer, Karl, Waldeggstrasse 83, A-4020 Linz (AT)
Erfinder: Wögerbauer, Johann, Steinbauerstrasse 7, A-4040 Linz (AT)
Erfinder: Czylok, Johann Guido, Dipl.- Ing., Hörzingerstrasse 60, A-4020 Linz (AT)

(74) Vertreter: Rossboth, Werner Heinz, c/o Sprecher Energie Österreich Gesellschaft m.b.H. Franckstrasse 51, A-4020 Linz (AT)

## Beschreibung

Die Erfindung bezieht sich auf eine Ansprechzähl- und Überwachungs-Einheit für funkenstreckenlose Überspannungsableiter, mit einem in die durch einen Leiter hergestellte Verbindung zwischen funkenstreckenlosem Überspannungsableiter und Erde geschalteten spannungsabhängigen Widerstand, insbesondere Siliziumcarbid-Widerstand, einer zum spannungsabhängigen Widerstand parallelgeschalteten Funkenstrecke und einer zu einem Widerstand parallelgeschalteten Gleichrichter-Brückenschaltung für ein Zählwerk.

Zum Schutze vor Schäden durch Überspannungen werden in Hochspannungsnetzen neben Überspannungsableitern mit Funkenstrecken und Ableitwiderständen, sogenannten Ventilableitern, auch funkenstreckenlose Überspannungsableiter mit in Reihe geschalteten Widerständen aus einem nichtlinearen Widerstandsmaterial, meist Zinkoxid, eingesetzt.

Durch Ableitvorgänge oder Alterungseffekte kann sich die Charakteristik der Widerstände aus Zinkoxid verschlechtern, wodurch der Überspannungsableiter seine Funktion verliert und schließlich zerstört wird.

Es hat sich daher als notwendig erwiesen, funkenstreckenlose Überspannungsableiter in bestimmten zeitlichen Abständen mittels einer Prüfung zu überwachen. Die Charakteristik der Widerstände kann am einfachsten dadurch geprüft werden, daß der ständig durch den Überspannungsableiter fließende Ableiterruhestrom gemessen wird.

Aus der EP-OS-0 019 884 ist eine Schaltungsanordnung zur Überwachung der Betriebseigenschaften eines funkenstreckenlosen Überspannungsableiters bekannt, bei der mit Hilfe einer erdseitig mit dem Überspannungsableiter in Reihe geschalteten Gleichspannungsquelle eine durch den Überspannungsableiter fließende Gleichstromkomponente gemessen werden kann. Die Schaltungsanordnung weist einen zur Gleichspannungsquelle parallel geschalteten Kondensator und einen zwischen Kondensator und Gleichspannungsquelle geschalteten Strommesser auf und ermöglicht, die betrieblichen Kennwerte eines funkenstreckenlosen Überspannungsableiters im angeschlossenen Zustand zu erfassen. Nachteilig bei dieser Schaltungsanordnung ist, daß eine Gleichspannungsquelle erforderlich ist, die in regelmäßigen Zeitabständen ausgewechselt oder aufgeladen werden muß.

Um die Häufigkeit von Blitzeinschlägen in den einzelnen Abschnitten von Hochspannungsnetzen und -anlagen erfassen zu können, besteht bei Überspannungsableitern allgemein schon lange der Wunsch, die Ansprechvorgänge zählen zu können. Es wurden daher bereits Ansprechzähleinrichtungen entwickelt, die sich im praktischen Einsatz bestens bewährten.

Beispielsweise aus der AT-PS-312 085 ist ein Ansprechzähler für Überspannungsableiter bekannt, bei dem der Spannungsabfall an einem vom Blitzstrom bzw. Ableitstrom durchflossenen Leitungsstück eines die Verbindung zwischen Überspannungsableiter und Erde herstellenden Leiters zur Auslösung eines Zählvorganges ausgenützt wird. Es sind eine Gleichrichter-Brückenschaltung, Spannungsbegrenzungsschaltung, Spannungsquelle, Speicherkondensator und Zählrelais vorgesehen. Von Nachteil ist bei dieser Schaltungsanordnung ebenfalls, daß eine zusätzliche Spannungsquelle notwendig ist. Aus der DE-AS-1 588 442 ist ein Ansprechzähler für Überspannungsableiter bekannt, der ohne zusätzliche Spannungsquelle auskommt und bei dem der durch den Ableitstrom an einem spannungsabhängigen Widerstand erzeugte Spannungsabfall zum Aufladen eines Speicherkondensators benützt wird, welcher sich anschließend über ein Zählrelais entladen kann. Da der erste Vorgang sehr schnell vor sich geht, haftet diesem Zählprinzip eine bestimmte Unsicherheit an. Unmittelbar hintereinander auftretende Ableitstromstöße oder zu kleine Ableitströme können nicht registriert werden. Den gleichen Nachteil weist eine aus der DE-OS-1 588 244 bekannte Anordnung mit Zählung und Strommessung auf, die den nächstkommenden Stand der Technik bildet.

Durch die in der Folge aufgezeigte erfindungsgemäße Ausführung wird eine Ansprechzähl- und Überwachungs-Einrichtung für funkenstreckenlose Überspannungsableiter der eingangs genannten Art bezweckt, die eine kontinuierliche Überwachung in Betrieb stehender Überspannungsableiter und Zählung der Ansprechvorgänge bei hoher Ansprechempfindlichkeit und Betriebssicherheit ermöglicht, ohne daß eine zusätzliche Spannungsquelle erforderlich ist. Dies wird dadurch erreicht, daß in parallel Schaltung zum spannungsabhängigen Widerstand zwei in Reihe geschaltete Widerstände vorhanden sind, die Eingänge der Gleichrichter-Brückenschaltung mit den Anschlüssen des einen Widerstandes und die Ausgänge mit dem Zählwerk und zusätzlich mit einem Strommesser leitend verbunden sind, wobei zwischen dem einen Ausgang und dem Zählwerk eine monostabile Kippstufe geschaltet ist und die gesamte Schaltung in einem geerdeten Gehäuse untergebracht ist, das zwei äußere Anschlüsse für den die Verbindung zwischen funkenstreckenlosem Überspannungsableiter und Erde herstellenden Leiter besitzt und vorzugsweise im Gehäusedeckel ein Fenster für die Ablesung des Zählerstandes und den Ableiterruhestrom aufweist.

Der spannungsabhängige Widerstand dient als Nebenschlußwiderstand für die Messung des Ableiterruhestromes. Um ihn vor hohen Ableitströmen relativ langer Dauer zu schützen, ist er durch eine Funkenstrecke überbrückt, welche so eingestellt ist, daß bei einem Ableitvorgang der größte Teil der Energie über die Funkenstrecke abgeführt wird. Der im Verlauf des Ableitvorganges zur Erde abfließende Ableitstrom verursacht am spannungsabhängigen Widerstand, da die Funkenstrecke rasch anspricht, einen sehr kurzen Spannungsimpuls, der zur Messung von positiven und negativen Ableitströmen gleichgerichtet und dem Zählwerk zugeführt wird. Die beiden zum spannungsabhängigen Widerstand parallelgeschalteten Widerstände dienen der Spannungs- bzw. Strombegrenzung

Der durch den bei einem Ableitvorgang zur Erde fließenden Ableitstrom verursachte sehr kurze Spannungsimpuls am spannungsabhängigen Widerstand kann zu kurz für eine direkte Ansteuerung des Zählwerkes sein und wird daher einer monostabilen Kippstufe zugeführt, welche unabhängig von der Form des Eingangsimpulses einen Ausgangsimpuls von definierter Dauer und Höhe erzeugt. Es ergibt sich dadurch eine sehr hohe Ansprechempfindlichkeit der Ansprechzähl-Einrichtung, wobei bei einem Ableiterruhestrom von 1 mA zwei Ableitvorgänge unmittelbar hintereinander registriert werden können.

Durch das geerdete Gehäuse ergibt sich eine kompakte, beispielsweise auf dem Ständer des Überspannungsableiters in der Hochspannungsschaltanlage einfach montierbare Ausführung, die sowohl einen Schutz gegen Korrosion und mechanische Beschädigungen oder andere äußere Einflüsse, als auch Schutz des Bedienungspersonals gegen zu hohe Berührungsspannung aufweist, wobei der Wert des Ableiterruhestromes und der Zählerstand jederzeit ablesbar sind.

Beim Ansprechen des Überspannungsableiters kann nämlich zwischen dem Erdpotential und der Fußarmatur eine beträchtliche Potentialdifferenz auftreten. Das geerdete Gehäuse bietet einen Schutz gegen zu hohe Berührungsspannung, der noch erhöht werden kann, wenn das kurze Leiterstück zwischen dem einen Anschluß des Gehäuses und der Fußarmatur des Überspannungsableiters und die Fußarmatur selbst isoliert ausgeführt sind.

In einer bevorzugten Ausführung ist für die Speisung der monostabilen Kippstufe eine, vorzugsweise aus zwei Dioden und zwei Kondensatoren bestehende, Spannungsverdoppelungsschaltung vorgesehen.

Dadurch wird einerseits ermöglicht, den Schaltkreis für die Ansprechzählung besser abstimmen und die Ansprechempfindlichkeit noch weiter erhöhen zu können, anderseits erreicht, daß auch während kurzzeitiger Ausschaltung des Hochspannungsnetzes Ableitvorgänge registriert werden können, da die Kondensatoren für eine ausreichende Speisespannung für die monostabile Kippstufe sorgen.

Bevorzugterweise besteht der Strommesser aus einem analogen Amperemeter mit einem Meßbereich von 0 bis 15 mA, dem Widerstände vorgeschaltet und eine Zenerdiode parallelgeschaltet ist. Die Ansprechzähl- und Überwachungs-Einrichtung ist damit für sämtliche derzeit verwendete funkenstreckenlose Überspannungsableiter praktisch für eine sehr lange Zeit einsetzbar und besonders betriebssicher, wobei Widerstände und Zenerdiode als Überspannungsschutz für den Strommesser dienen.

In einer Weiterbildung kann für den Strommesser eine zweite Gleichrichter-Brückenschaltung vorgesehen sein, deren Eingänge mit den Anschlüssen eines dem spannungsabhängigen Widerstand parallelgeschalteten Widerstandes verbunden sind. Eine verbesserte Anpassung an den Energiebedarf des Strommessers und ein abbildungsgerechterer Strom werden damit erreicht.

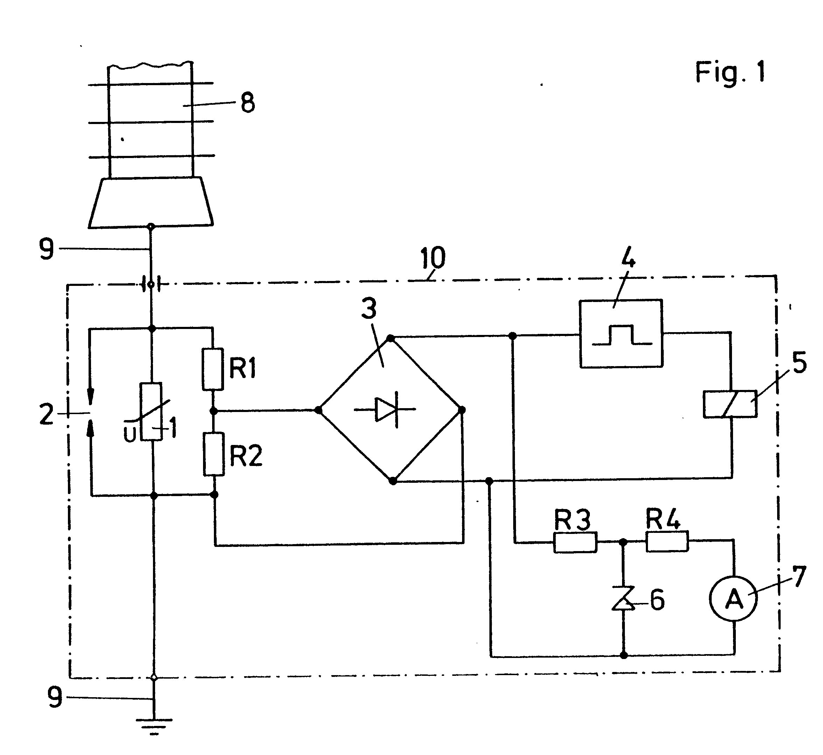

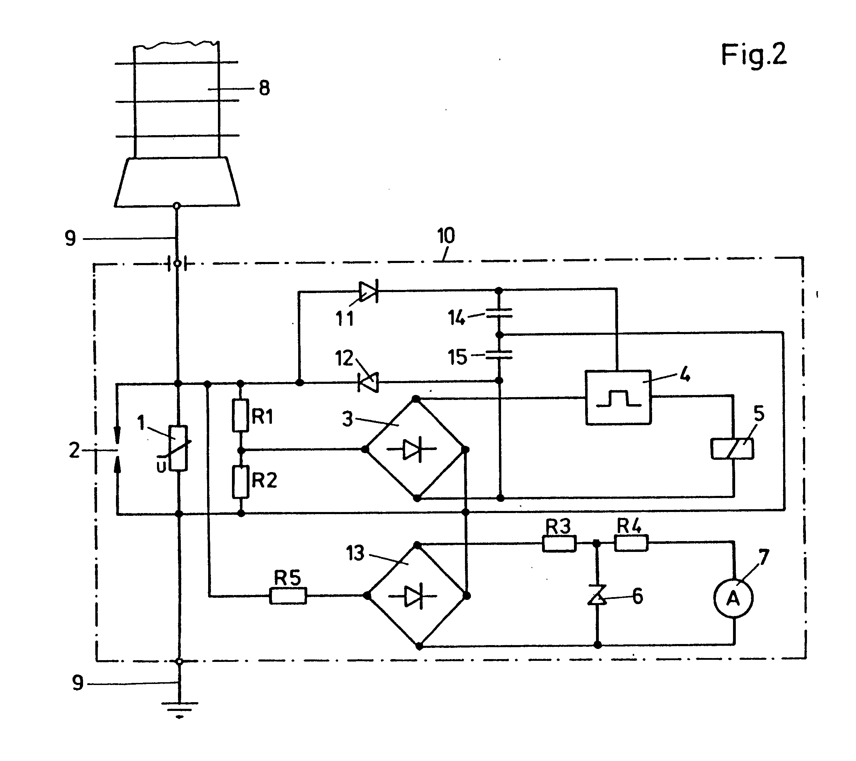

Im folgenden werden an Hand der bei liegenden Zeichnungen Ausführungsbeispiele des Erfindungsgegenstandes näher erläutert. Es zeigen Fig. 1 das Schaltprinzip einer ersten Ausführung und Fig. 2 das Schaltprinzip einer zweiten Ausführung einer an einen funkenstreckenlosen Überspannungsableiter angeschlossenen erfindungsgemäßen Ansprechzähl- und Überwachungs-Einrichtung.

Der funkenstreckenlose Überspannungsableiter 8 weist einen oberen nicht dargestellten Anschluß auf, der mit einem Hochspannungsnetz verbunden ist, wogegen der untere Anschluß durch einen Leiter 9 mit Erde elektrisch leitend in Verbindung steht.

In diese Verbindung ist in der Fig. 1 ein Siliziumcarbid-Widerstand 1 geschaltet, der einerseits durch eine Funkenstrecke 2 und anderseits durch zwei in Reihe geschaltete Widerstände R1, R2 überbrückt wird. Die Anschlüsse des einen Widerstandes R2 sind an die Eingänge einer bekannten Gleichrichter-Brückenschaltung 3 angeschlossen, deren zwei Ausgänge einen Schaltkreis für ein Zählwerk 5 und einen für einen Strommesser 7 speisen. Dem Zählwerk 5, einem sechsstelligen Rollenzählwerk mit digitaler Anzeige, ist eine als integrierter Schaltkreis ausgeführte monostabile Kippstufe 4 vorgeschaltet.

Im Hochspannungsnetz entstandene Überspannungen leiten ab einer vorbestimmten Höhe im funkenstreckenlosen Überspannungsableiter 8 einen Ableitvorgang ein. Während dieses Ableitvorganges wird die Überspannungswelle zur Erde abgeleitet und es fließt durch die Zinkoxid-Widerstände der funkenstreckenlosen Überspannungsableiter 8 und den Siliziumcarbid-Widerstand 1 ein Ableitstoßstrom. Soferne dieser Ableitstrom einen vorbestimmten Wert überschreitet, zündet die Funkenstrecke 2 durch, womit der größte Teil der Energie des Ableitvorganges über die Funkenstrecke 2 zur Erde abgeleitet wird. Der Ableitstrom verursacht am Siliziumcarbid-Widerstand 1 einen kurzen Spannungsimpuls, da die Funkenstrecke 2 sehr rasch anspricht. Dieser Impuls wird durch die Widerstände R1 und R2 geteilt, vermindert und in der Gleichstrom-Brückenschaltung 3 gleichgerichtet, so daß positive und auch negative Ableitströme erfaßt und ihre Impulse in der monostabilen Kippstufe 4 verarbeitet werden können. Unabhängig von der Form des Eingangsimpulses erzeugt die monostabile Kippstufe 4 einen Ausgangsimpuls von definierter Dauer und Höhe, der das Zählwerk 5 anregt. Der besondere Vorteil des Schaltkreises zur Ansprechzählung liegt darin, daß durch die Verwendung der monostabilen Kippstufe 4 der eigentliche Zählimpuls von der Form und Dauer des Ableitstromes unabhängig ist und eine sehr hohe Ansprechempfindlichkeit auch bei kleinen Ableitströmen erreicht wird.

Für die Messung des ständig durch den funkenstreckenlosen Überspannungsableiter 8 fließenden Ableiterruhestromes dient der Siliziumcarbid-Widerstand 1 bzw. die Widerstände R1 und R2 als Nebenschlußwiderstände. Der Teilstrom des Ableiterruhestromes wird in der Gleichrichter-Brückenschaltung 3 gleichgerichtet und über die Widerstände R3 und R4 dem Strommesser 7, einem Amperemeter mit einem Meßbereich von 0 bis 15 mA, zugeführt. Eine dem Strommesser 7 und Widerstand R4 parallelgeschaltete Zenerdiode 6 mit vorgeschaltetem Widerstand R3 dient als Überspannungsschutz.

Die Ansprechzähl- und Überwachungs-Einrichtung benötigt keine externe Stromversorgung, da der Spannungsabfall am Siliziumcarbid-Widerstand 1 durch den Ableiterruhestrom gleichzeitig als Spannungsversorgung für die Schaltkreise verwendet wird. Die Schaltung ist so abgestimmt, daß bei einen Ableiterruhestrom von 1 mA zwei Ableitvorgänge unmittelbar hintereinander registriert werden.

In Fig. 2 ist eine zweite Ausführungsvariante des Schaltprinzipes einer erfindungsgemäßen Ansprechzähl- und Überwachungs-Einrichtung dargestellt, wobei gleiche Komponenten der Schaltung mit den gleichen Bezugszeichen wie in Fig. 1 bezeichnet sind. Um den Schaltkreis für die Ansprechzählung besser abstimmen und die Ansprechempfindlichkeit noch weiter erhöhen zu können, ist bei dieser Ausführungsvariante eine Spannungsverdoppelungsschaltung für die Speisung der monostabilen Kippstufe 4 und das Zählwerk 5 vorgesehen. Die Spannungsverdoppelungsschaltung besteht im wesentlichen aus zwei Kondensatoren 14, 15 und zwei Dioden 11, 12, wobei der Eingang der Diode 11 und der Ausgang der Diode 12 mit dem Leiter 9 zwischen funkenstreckenlosem Überspannungsableiter 8 und Siliziumcarbid-Widerstand 1 in Verbindung stehen. Der Ausgang der Diode 11 ist an den Kondensator 14 und an einen Eingang zur Speisung der monostabilen Kippstufe 4 angeschlossen. Mit dem Eingang der Diode 12 sind der Kondensator 15 und die Verbindung zwischen Zählwerk 5 und Gleichrichter-Brückenschaltung 3 verbunden. Die Kondensatoren 14 und 15 sind miteinander verbunden und an den Eingang der Gleichrichter-Brückenschaltung 3 angeschlossen, der auch mit dem Widerstand R2 in Verbindung steht.

Durch diese Schaltung kann die Speisespannung für die monostabile Kippstufe 4 und das Zählwerk 5 verdoppelt werden. Die für den Strommesser 7 benötigte Speisespannung wird bei dieser Ausführungsvariante durch eine zweite Gleichrichter-Brückenschaltung 13 erzeugt, der ein Widerstand R5 vorgeschaltet ist und welche dem Siliziumcarbid-Widerstand 1 nebengeschaltet ist.

Das Zählwerk 5 kann Hilfskontakte für eine Fernmeldung aufweisen, auch eine Ausrüstung des Strommessers 7 für eine Fernmessung unter Lichtleiteranwendung ist denkbar.

Sämtliche Komponenten der Ansprechzähl- und Überwachungs-Einrichtung sind in einem geerdeten, wasserdichten und korrosionsbeständigen Gehäuse 10 untergebracht, das im Gehäusedeckel ein Fenster für die Ablesung des Zählerstandes und den Wert des Ableiterruhestromes besitzt. Damit ergibt sich eine kompakte, einfach montierbare, beispielsweise auf dem Ständer des Überspannungsableiters 8, Ausführung der Ansprechzähl- und Überwachungs-Einrichtung, die sowohl einen hohen Schutz gegen Korrosion und mechanische Beschädigungen, als auch Berührungsschutz aufweist. Der Wert des Ableiterruhestromes, welcher zeigt, ob der funkenstreckenlose Überspannungsableiter 8 noch funktionstüchtig ist, sowie der Ansprechzählerstand sind jederzeit bequem ablesbar.

Um eine optimale Ansprechempfindlichkeit und Anzeige des Ableiterruhestromes zu erreichen, wird die Ansprechzähl- und Überwachungs-Einrichtung möglichst nahe beim funkenstreckenlosen Überspannungsableiter montiert sein. Beim Ansprechen des Überspannungsableiters kann jedoch zwischen dem Erdpotential und der Fußarmatur des Ableiters eine beträchtliche Potentialdifferenz auftreten, die für das Bedienungspersonal der Hochspannungsanlage eine Gefahr bedeuten kann. Durch das geerdete Gehäuse der Ansprechzähl- und Überwachungs-Einrichtung kann diese Gefahr gebannt werden, umsomehr wenn das Leiterstück zwischen Ableiter und Einrichtung und die Fußarmatur isoliert ausgeführt sind.

**Patentansprüche**

1. Ansprechzähl- und Überwachungs-Einrichtung für funkenstreckenlose Überspannungsableiter (8), mit einem in die durch einen Leiter (9) hergestellte Verbindung zwischen funkenstreckenlosem Überspannungsableiter (8) und Erde geschalteten spannungsabhängigen Widerstand (1), insbesondere Siliziumcarbid-Widerstand, einem Zählwerk (5), einer zum spannungsabhänigen Widerstands (1) parallelgeschalteten Funkenstrecke (2) und einer zum spannungsabhängigen Widerstand (1) über einen Vorwidestand (R1) parallelgeschalteten Gleichrichter-Brückenschaltung (3) für einen Strommesser (7), dadurch gekennzeichnet , daß die Eingänge der Gleichrichter-Brückenschaltung (3) mit den Anschlüssen eines zusätzlichen Widerstands (R2) und die Ausgänge der Gleichrichter-Bräckenschaltung (3) mit dem Zälwerk (5) leitend verbunden sind, wobei zwischen einem der Ausgänge und dem Zählwerk (5) eine monostabile Kippstufe (4) geschaltet ist, und die gesamte Schaltung in einem geerdeten Gehäuse (10) untergebracht ist, das zwei äußere Anschlüsse für den die Verbindung zwischen funkenstreckenlosem Überspannungsableiter (8) und Erde herstellenden Leiter (9) besitzt und vorzugsweise im Gehäusedeckel ein Fenster für die Ablesung des Zählerstandes und den Ableiterruhestrom aufweist.

2. Ansprechzähl- und Überwachungs-Einrichtung nach Anspruch 1, dadurch gekennzeichnet, daß für die Speisung der monostabilen Kippstufe (4) eine, vorzugsweise aus zwei Dioden (11, 12) und zwei Kondensatoren (14, 15) bestehende, Spannungsverdoppelungsschaltung vorgesehen ist.

3. Ansprechzähl- und Überwachungs-Einrichtung nach Anspruch 1 oder 2, dadurch gekennzeichnet, daß für den Strommesser (7) eine zweite Gleichrichter-Brückenschaltung (13) vorgesehen ist, deren Eingänge über einen weiteren Vorwiderstand (R5) dem spannungsabhängigen Widerstand (1) parallelgeschaltet sind.

## Claims

1. Sparkover counting and monitoring device for spark-gap-less surge arresters (8), comprising a voltage-dependent resistor (1) connected into the connection, established by a conductor (9), between spark-gap-less surge arrester (8) and earth, particularly a silicon carbide resistor, a counting mechanism (5), a spark gap (2) connected in parallel with the voltage-dependent resistor (1), and a rectifier bridge circuit (3), connected in parallel with the voltage-dependent resistor (1) via a series resistor (R1), for a current meter (7), characterized in that the inputs of the rectifier bridge circuit (3) are conductively connected to the terminals of an additional resistor (R2) and the outputs of the rectifier bridge circuit (3) are conductively connected to the counting mechanism (5), a monostable flip flop (4) being connected between one of the outputs and the counting mechanism (5) and the entire circuit being accommodated in an earthed housing (10) which has two outer terminals for the conductor (9) establishing the connection between spark-gap-less surge arrester (8) and earth and preferably exhibits a window in the housing cover for reading the count and the quiescent arrester current.

2. Sparkover counting and monitoring device according to Claim 1, characterized in that a voltage doubling circuit preferably consisting of two diodes (11, 12) and two capacitors (14, 15) is provided for feeding the monostable flip flop (4).

3. Sparkover counting and monitoring device according to Claim 1 or 2, characterized in that a second rectifier bridge circuit (13), the inputs of which are connected, in parallel with the voltage-dependent resistor (1) via a further series resistor (R5), is provided for the current meter (7).

## Revendications

1. Dispositif de surveillance et de comptage des décharges d'un parafoudre sans éclateur à étincelles (8), comprenant une résistance (1) dépendante de la tension connectée dans la liaison établie par un conducteur (9) entre le parafoudre sans éclateur à étincelles (8) et la terre, la résistance étant en particulier au carbure de silicium, un compteur (5), un éclateur à étincelles (2) connecté en parallèle sur la résistance (1) dépendante de la tension, et un pont-redresseur (3), pour un dispositif de mesure de courant (7), connecté en parallèle, par l'intermédiaire d'une résistance (R1), avec la résistance dépendante de la tension (1), caractérisé en ce que les entrées du pont-redresseur (3) sont reliées électriquement aux bornes d'une résistance supplémentaire (R2) et que les sorties du pont-redresseur (3) sont reliées électriquement au compteur (5), une bascule monostable (4) étant connectée entre l'une desdites sorties et le compteur (5), l'ensemble du circuit étant disposé dans un boîtier mis à terre, le boîtier possédant deux connexions extérieures pour le conducteur (9) établissant la liaison entre le parafoudre sans éclateur à étincelles et la terre, le couvercle du boîtier comprenant avantageusement une fenêtre pour la lecture de l'état du compteur et du courant de fuite du parafoudre.

2. Dispositif de surveillance et de comptage des décharges d'un parafoudre sans éclateur à étincelles selon la revendication 1, caractérisé en ce qu'il est prévu, pour l'alimentation de la bascule bistable (4), un circuit doubleur de tension comprenant avantageusement deux diodes (11, 12) et deux condensateurs (14, 15).

3. Dispositif de surveillance et de comptage des décharges d'un parafoudre sans éclateur à étincelles, selon l'une des revendications 1 et 2, caractérisé en ce qu'il est prévu, pour le dispositif de mesure de courant (7), un second pont-redresseur (13) dont les entrées sont connectées en parallèle, par l'intermédiaire d'un autre résistance (R5), sur la résistance (1) dépendante de la tension.

Fig. 1

Fig.2

EP 0 190 547 B1